# FASCICULE DE BREVET EUROPEEN

(11) **EP 3 609 780 B1**
(45) Date de publication et mention de la délivrance du brevet: **24.03.2021**
(21) Numéro de dépôt: 18716292.0
(22) Date de dépôt: 11.04.2018
(51) Int. Cl.: B63C 13/00

(54) **VÉHICULE AMPHIBIE POURVU D'UN TRAIN DE ROULAGE CARÉNÉ**
AMPHIBIENFAHRZEUG MIT EINEM VERKLEIDETEN FAHRWERK
AMPHIBIOUS VEHICLE PROVIDED WITH A FAIRED RUNNING GEAR

(30) Priorité: 12.04.2017 FR 1753182
(43) Date de publication de la demande: 19.02.2020
(73) Titulaire: Wettoncraft, 59200 Tourcoing (FR)
(72) Inventeur: DIVRY, Eric, 59126 Linselles (FR)
(74) Mandataire: Decobert, Jean-Pascal
(86) Numéro de dépôt international: PCT/EP2018/059338
(87) Numéro de publication internationale: WO 2018/189269

(56) Documents cités:
- WO-A1-2016/185039
- WO-A1-2017/211912
- DE-A1- 2 204 833
- FR-A1- 2 773 533
- US-A- 2 890 466
- US-A- 3 618 149
- US-A1- 2002 017 229
- US-A1- 2008 047 481

## Description

### DOMAINE DE L'INVENTION

La présente invention est relative à un véhicule amphibie. L'invention concerne plus particulièrement une embarcation légère de type bateau-remorque, à destination des plaisanciers et des professionnels.

### ARRIERE-PLAN TECHNOLOGIQUE

Dans le domaine des véhicules amphibies, un bateau-remorque est un bateau particulièrement adapté à la navigation. Un tel bateau-remorque est en général une embarcation légère apte à naviguer qui intègre au moins deux roues et éventuellement un système de remorquage de sorte que l'embarcation a la possibilité de rouler sur terre. Ce type d'embarcation permet d'effectuer des manoeuvres à terre sans recourir à une remorque indépendante. Ce type d'embarcation simplifie par conséquent la logistique traditionnelle requise pour la mise à l'eau et la sortie de l'eau d'une embarcation standard. Les bateaux-remorques peuvent notamment être tractés sur une route. Afin de conserver de bonnes performances en navigation malgré l'ajout de roues, une solution consiste à concevoir un système de roues escamotables plutôt que fixes sous la coque. Après mise à l'eau, les roues peuvent être retirées ou désassemblées manuellement par exemple.

Une autre solution connue est un système de roues rétractables. Le document US 4515102 divulgue un tel système de roues pouvant basculer entre une position de roulage et une position de navigation, lesdites positions étant simplement maintenues par la tension d'un ressort sur le train de roulage mis en butée. Les roues ainsi relevées dans la position de navigation restent apparentes et la coque de l'embarcation, en particulier la carène, garde son intégrité.

D'autres solutions particulièrement complexes consistent à rétracter les roues au travers de la carène de l'embarcation. Le document FR 2773533 A1 divulgue par exemple une coque équipée d'un essieu rigide supportant deux bras de suspension portant des roues. L'essieu peut pivoter entre une position de roulage et une position de navigation dans laquelle les roues sont remontées et logent dans des cavités ménagées dans la coque. Le document US 2006/073745 divulgue une autre solution.

Dans ce dernier cas, des volets mobiles solidaires de la coque permettent dans un second temps de fermer les ouvertures pratiquées dans la coque, afin de préserver les performances de la carène en mode navigation.

Dans le cas particulier des embarcations amphibies à coque semi-rigide, une solution mise en oeuvre par la société Sealegs consiste à relever les trains roulants au niveau de la proue et au niveau de la poupe, à l'extérieur de la coque semi-rigide.

Les solutions envisagées sont complexes à mettre en oeuvre et le risque de panne est élevé.

Dans le cas des embarcations amphibies à coque semi-rigide Sealegs, les trains roulants sont apparents en position rétractée. La silhouette de l'embarcation se trouve ainsi visuellement alourdie par les appendices que constituent les trains roulants, par rapport à une embarcation à coque semi-rigide classique. Les trains de roulage en position rétracté modifient par ailleurs sensiblement le centre de gravité de l'embarcation. La modification du centre de gravité peut entrainer un comportement différent de l'assiette de l'embarcation et en réduire la stabilité.

Un objet de la présente invention est une embarcation comprenant un train de roulage dont le passage d'une position rétractée à une position déployée et vice-versa est simplifié.

En particulier, un objet de la présente invention est de proposer une embarcation amphibie à coque semi-rigide comprenant un train de roulage en position rétractée visuellement bien intégré, et dont le déplacement du centre de gravité est limité.

### RESUME DE L'INVENTION

Un premier aspect de l'invention concerne un véhicule selon la revendication 1.

Cette disposition permet notamment de simplifier grandement les changements de position du train de roulage. En effet, en solidarisant l'élément de carène au train de roulage, la fermeture et l'ouverture de la coque pour le passage des roues est automatique et synchronisée. De plus, cela limite les risques de pannes en limitant le nombre de pièces nécessaire à la mise en mouvement de ces deux éléments. Par exemple, on n'a plus à prévoir un système indépendant dédié à l'ouverture et la fermeture de la coque. Enfin, l'utilisation s'en trouve simplifiée car l'actionnement d'une seule commande permet l'ouverture de la coque et le déploiement du train de roulage d'une part, et la rétractation du train de roulage et la fermeture de la coque d'autre part.

Le positionnement du train de roulage entre deux boudins permet d'intégrer le train de roulage directement dans la coque semi-rigide. La silhouette d'une embarcation à coque semi-rigide traditionnelle est ainsi préservée lorsque le train de roulage est rétracté. Par ailleurs, l'encombrement lié au train de roulage dans la position rétractée est réduit par rapport à une solution consistant à relever les trains roulants à l'extérieur de la coque semi-rigide.

Avantageusement, dans la position rétractée du train de roulage, l'élément de carène assure une continuité hydrodynamique avec les boudins situés longitudinalement de part et d'autre du train de roulage.

Cette disposition du train de roulage entre les boudins combat un préjugé technique selon lequel un tel élément intercalé entre les boudins nuirait à la navigabilité de l'embarcation. Au contraire, l'élément de carène solidaire du train de roulage permet de stabiliser l'embarcation et de limiter l'impact de la vague d'étrave, notamment en décélération ou en courbe.

De préférence, le positionnement du train de roulage se fait sensiblement au centre de la dimension en longueur de la coque. Ainsi, en intercalant le train de roulage à cette position, on limite le risque de déplacement du centre de gravité vers l'avant ou l'arrière de l'embarcation.

Avantageusement, dans la position déployée du train de roulage, cette disposition de l'élément de carène solidaire du train de roulage permet de proposer une solution adaptée à la nécessité d'un dispositif anti-projections lié au train de roulage. L'élément de carène est notamment efficace pour limiter raisonnablement les projections de matière lors du roulage dans la position déployée du train de roulage, et complète avantageusement une partie de la coque semi-rigide et/ou de la carène dans la position rétractée du train de roulage, de sorte que la navigabilité de l'embarcation est préservée.

Selon une possibilité, l'élément de carène est situé au moins en partie en face d'une première portion d'une bande de roulement de la roue, et de préférence devant ladite bande de roulement lors du roulage en marche avant d'une automobile tractant l'embarcation. Ce positionnement avantageux permet une amélioration nette de la fonction de garde-boue que peut avoir l'élément de carène en position déployée.

L'élément de carène peut notamment comprendre une surface interne configurée pour contenir les projections et les évacuer vers le sol.

Selon une autre possibilité, le train de roulage peut également comprendre un deuxième garde-boue entourant une deuxième portion de la bande de roulement opposée à la première portion, de sorte à contenir de manière optimale une projection de matière lors du roulage.

La surface interne de l'élément de carène peut également être configurée pour loger au moins partiellement le train de roulage.

Une surface externe de l'élément de carène peut être convexe.

L'élément de carène peut donc en outre former un carénage du train de roulage dans la position déployée du train de roulage, de sorte qu'un écoulement d'un fluide tel que l'air se trouve facilité.

De manière avantageuse, l'élément de carène peut avoir un effet aérodynamique dans la position déployée et un effet hydrodynamique dans la position rétractée.

Selon une possibilité, la coque de l'embarcation est rigide.

Selon une autre possibilité la coque de l'embarcation est semi-rigide et comprend au moins deux boudins pneumatiques sur un pourtour de ladite coque.

### BREVE INTRODUCTION DES FIGURES

D'autres caractéristiques, buts et avantages de la présente invention apparaitront à la lecture de la description détaillée qui suit, et en regard des dessins annexés donnés à titre d'exemples non limitatifs et sur lesquels :
- les figures 1a et 1b montrent respectivement une vue trois-quarts arrière et un profil d'une embarcation à coque rigide selon un mode de réalisation de l'invention, dans une position rétractée du train de roulage ;
- les figures 2a et 2b montrent respectivement une vue trois-quarts arrière et un profil d'une embarcation à coque rigide selon un mode de réalisation de l'invention, dans une position déployée du train de roulage ;
- les figures 3a et 3b montrent respectivement une vue trois-quarts avant et un profil d'une embarcation à coque semi-rigide selon un mode de réalisation de l'invention, dans une position rétractée du train de roulage ;
- les figures 4a et 4b montrent respectivement une vue trois-quarts avant et un profil d'une embarcation à coque semi-rigide selon un mode de réalisation de l'invention, dans une position déployée du train de roulage.
- Les figures 5a et 5b montrent une roue jockey respectivement dans une position déployée et dans une position rétractée, selon un mode de réalisation de l'invention.

### DESCRIPTION DETAILLEE

L'invention comprend notamment les caractéristiques optionnelles ci-après pouvant être utilisées en association ou alternativement :
- l'élément de carène est situé au moins en partie en face d'une première portion d'une bande de roulement de la roue, dans la position déployée du train de roulage.
- l'élément de carène comprend une surface interne configurée pour former au moins en partie un premier garde-boue dans la position déployée du train de roulage.
- le train de roulage comprend au moins un deuxième garde-boue configuré pour entourer une deuxième portion d'une bande de roulement de la roue.
- l'élément de carène présente une largeur supérieure à celle de la roue.
- l'élément de carène comprend une surface externe convexe.
- l'élément de carène comprend au moins une bavette souple configurée pour relier au moins un bord dudit élément de carène avec au moins une partie de la coque.
- l'élément de carène est configuré pour coopérer au moins longitudinalement avec une partie de la coque afin de réaliser une continuité avec ladite au moins une partie de la coque dans la position rétractée du train de roulage.
- le train de roulage comprend au moins un bras de suspension, au moins un amortisseur et au moins une jambe de force configurée pour pouvoir bloquer le train de roulage dans la position déployée.
- la jambe de force présente une mobilité en rotation par rapport au train de roulage, selon un axe de rotation parallèle à celui de la roue.
- la jambe de force présente au moins un appui sur la coque, ledit appui pouvant être positionné dans un ensemble de positions distribuées selon un arc de cercle au niveau de la coque.
- le train de roulage coopère avec un vérin ou un système de levage avec démultiplication mécanique configuré pour déployer et rétracter ledit train de roulage.
- le train de roulage comprend un axe de rotation configuré pour que le train de roulage passe de la position rétractée à la position déployée et vice-versa.
- l'élément de carène est articulé relativement à la coque selon un axe de rotation du train de roulage.
- l'élément de carène est uniquement fixé sur le train de roulage.
- selon un mode de réalisation, le véhicule amphibie comprend en outre un bras escamotable au moins en partie dans la coque dans une position relevée du bras, ledit bras étant solidaire d'une roue jockey configurée pour fournir un appui au sol dans une position déployée du bras.
- selon le mode de réalisation précédent, le bras occupe une position désaxée longitudinalement par rapport à un plan de symétrie entre deux trains de roulage du véhicule amphibie.

La présente invention est particulièrement avantageuse dans le domaine des embarcations légères, dans la mesure où un tel train de roulage rétractable muni d'un tel élément de carène permet à la fois de stabiliser l'embarcation lors de la navigation lorsque le train est rétracté, et de réduire efficacement les projections lors du roulage lorsque le train est déployé.

Dans la suite de la description et des revendications, on entend par :
- Dimension en longueur : la dimension la plus longue de la coque du navire. De préférence cette dimension s'étire selon un axe passant par la proue et la poupe de la coque.
- Dimension en largeur : la dimension perpendiculaire à la dimension en longueur et permettant de définir un plan sensiblement horizontal.
- Dimension en profondeur : Dimension perpendiculaire au plan horizontale définit par les dimensions en longueur et en largeur.
- l'avant ou la partie avant du train de roulage dans la position déployée s'entend par référence à une marche avant de l'embarcation attelée et tractée par une automobile par exemple, la marche avant correspondant à une direction suivant un axe parallèle à la dimension en longueur de la coque. Un tel attelage n'est cependant pas nécessairement utile ou effectif lors d'une manoeuvre de l'embarcation selon l'invention.
- Semi-rigide : embarcation dont le pourtour est souple de préférence constitué d'au moins un boudin gonflable, et qui comporte à sa base une coque rigide.

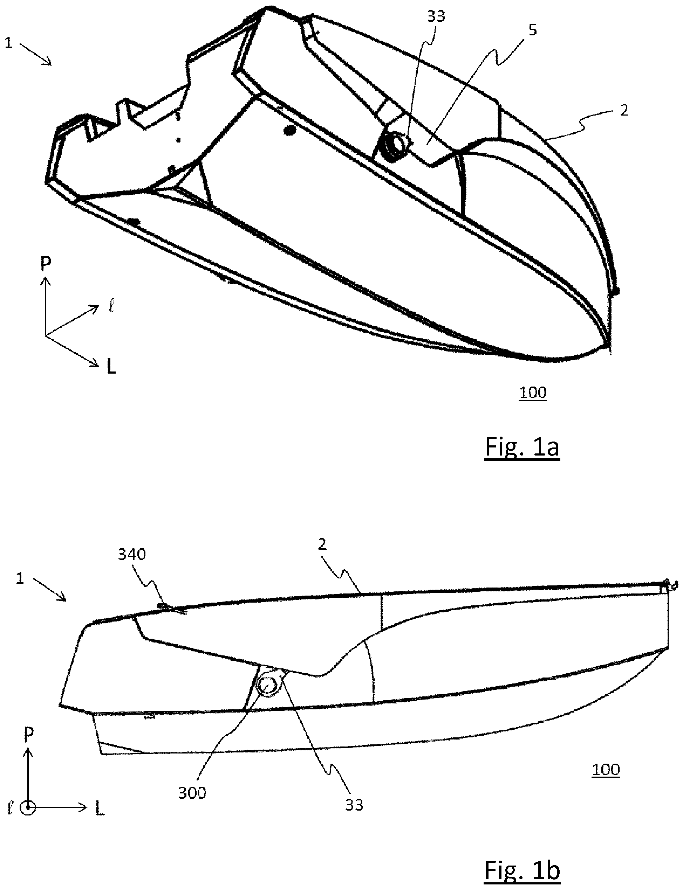

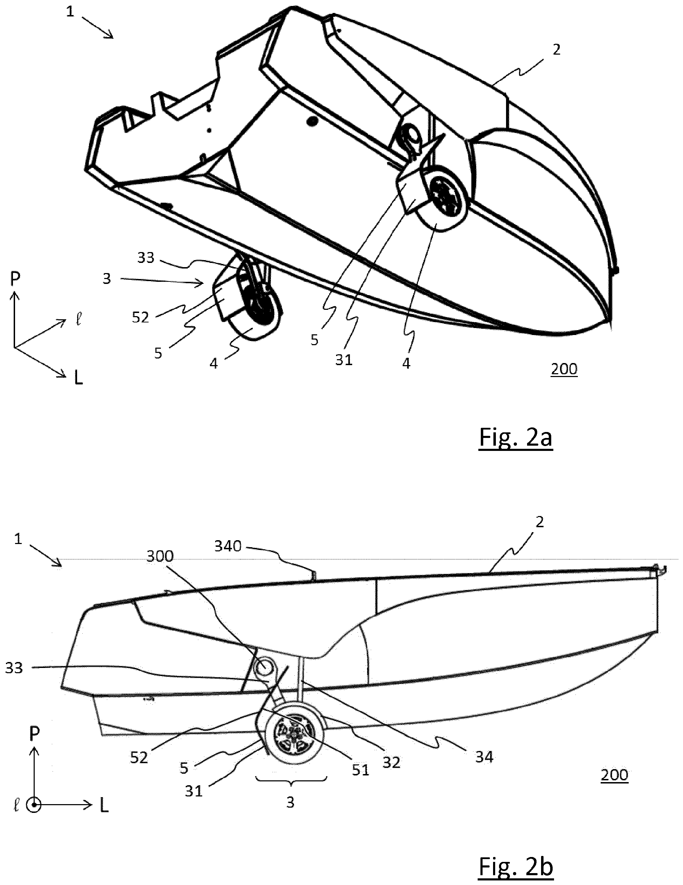

En référence aux figures 1a, 1b et 2a, 2b un mode de réalisation préféré est une embarcation 1 légère à coque 2 de préférence rigide ou semi-rigide comprenant au moins un train de roulage 3 et de préférence deux trains de roulage 3 munis chacun d'au moins une roue 4 et de préférence une seule roue. Avantageusement, la coque 2 comprend une dimension en longueur L, une dimension en largeur I et une dimension en profondeur P. Avantageusement, la dimension en longueur L et la dimension en largeur l définissent un plan de préférence horizontal. Avantageusement, un utilisateur se déplace à l'intérieur de l'embarcation suivant ledit plan horizontal. Chaque train de roulage 3 est rétractable, et peut être positionné au moins dans une position déployée 200 et dans une position rétractée 100. Les trains de roulage 3 sont de préférence situés sur deux bords latéraux opposés de l'embarcation 1.

Selon une possibilité, chaque train de roulage 3 peut être indépendant l'un de l'autre.

Selon une autre possibilité, les trains de roulage ont un mouvement coordonné ou synchronisé pour passer de la position déployée 200 à la position rétractée 100, et inversement. Un essieu peut par exemple relier les trains de roulage 3.

Le train de roulage 3 comprend de préférence un axe de rotation 300 vis-à-vis de la coque 2, configuré pour déployer ou rétracter ledit train de roulage 3.

Dans la position rétractée 100, le train de roulage 3 est de préférence logé dans un logement prévu dans la coque 2, de sorte que l'embarcation 1 puisse naviguer sans entrave.

Dans la position déployée 200, le train de roulage 3 permet d'assurer une liaison au sol de la roue 4. L'embarcation 1 peut ainsi être manœuvrée au sol sans qu'il soit nécessaire de recourir à une remorque par exemple.

L'embarcation 1 comprend de préférence un timon ou un système d'attelage de sorte qu'il est possible d'atteler et de tracter l'embarcation 1 au moyen d'une automobile par exemple. Dans ce cas, en particulier si l'embarcation 1 est tractée sur une route il est avantageux que le train de roulage 3 soit muni de dispositifs anti projections. De tels dispositifs anti projections, ou autrement appelés garde-boue permettent de limiter les projections d'élément liquide et/ou solide lors du roulement des roues 4..

Le train de roulage 3 de l'embarcation 1 comprend avantageusement un élément de carène 5 qui est dédié audit train de roulage 3, de sorte que cet élément 5 fait au moins en partie office de dispositif anti projections dans la position déployée 200. L'élément de carène 5 est avantageusement solidaire du train de roulage 3 et de préférence fixé sur celui-ci. On entend par « solidaire du train de roulage » le fait qu'une liaison physique existe entre ledit train de roulage 3 et l'élément de carène 5. Ladite liaison physique permet le fait que tout déplacement du train de roulage 3 entraine de facto un déplacement similaire, et de préférence identique du train de roulage 3.

En particulier, l'élément de carène 5 est situé face à une portion d'une bande de roulement de la roue 4 et de préférence devant ladite bande de roulement lors du roulage en marche avant de l'automobile tractant l'embarcation 1 par exemple. On entend par devant la bande de roulement, le positionnement par référence à la marche avant de l'automobile tractant l'embarcation 1 par exemple.

L'élément de carène 5 présente une surface interne 51. Cette surface interne 51 est de préférence configurée pour limiter les projections lors du roulage. Cette surface 51 peut présenter des rigoles ou des sculptures configurées pour contenir une projection d'eau ou de boue, et l'évacuer par écoulement en direction du sol par exemple. Les rigoles de la surface interne 51 peuvent orienter avantageusement cet écoulement vers le sol. L'élément de carène 5 peut par conséquent former un premier garde-boue 31.

Le train de roulage 3 de l'embarcation 1 peut également comprendre un deuxième garde-boue 32 configuré pour entourer une deuxième portion de la bande de roulement de la roue 4. Ce deuxième garde-boue 32 est de préférence situé en regard du premier garde-boue 31 de manière à contenir de façon optimale la projection de matière lors du roulage.

Le train de roulage 3 de l'embarcation 1 comprend en outre au moins un bras de suspension 33, de préférence une lame de suspension intégrée au bras 33 ou un amortisseur, et une jambe de force 34 destinée au moins à bloquer le train de roulage 3 dans la position déployée 200. Un système de freinage peut éventuellement compléter le train de roulage 3.

L'élément de carène 5 peut avantageusement masquer en partie au moins un élément parmi le bras de suspension 33, l'amortisseur, la jambe de force 34 et le système de freinage par exemple. La surface interne 51 peut présenter une forme complémentaire audit au moins un élément de sorte que l'élément puisse y être logé en partie.

L'élément de carène 5 peut alors avantageusement former un carénage pour le train de roulage 3. Une surface externe 52 de l'élément de carène 5 peut être configurée pour optimiser un écoulement d'un fluide tel que l'air autour du train de roulage 3 lors du roulage et/ou d'un liquide lors de la navigation. La surface externe 52 peut être au moins en partie convexe par exemple.

L'élément de carène 5 présente une largeur au moins égale ou supérieure à la largeur de la bande de roulement de la roue 4. La largeur de l'élément de carène 5 peut être comprise entre 15 cm et 50 cm par exemple. Une longueur de l'élément de carène 5 peut être comprise entre 40cm et 90 cm par exemple, de sorte qu'une majeure partie de l'avant du train de roulage 3 soit carénée au moins dans la position déployée 200.

Dans la position déployée 200, la jambe de force 34 permet avantageusement de renforcer le train de roulage 3 lors du roulage, en supportant une partie d'un effort ou d'une charge.

La jambe de force 34 peut être une tige métallique, de préférence mobile en rotation par rapport au bras de suspension 33, selon un axe parallèle aux axes de rotation du train de roulage 3 et de la roue 4. Cette configuration permet d'améliorer une manipulation de la jambe de force 34, et de replier celle-ci dans la position rétractée 100 afin de réduire avantageusement un encombrement lié au train de roulage 3 pourvu de sa jambe de force 34.

La jambe de force 34 est configurée pour prendre appui directement ou indirectement via une lame de suspension sur la coque 2. Ledit appui peut être une partie saillante de la jambe de force 34 par exemple. Cette partie saillante peut être guidée par une glissière sur la coque 2 entre une première butée relative à la position rétractée 100 et une deuxième butée relative à la position déployée 200 par exemple.

La jambe de force 34 peut notamment présenter un coude formant avantageusement une poignée 340 au niveau d'une extrémité de la jambe de force 34. Ladite poignée 340 peut traverser une partie de la coque 2 par une ouverture de sorte qu'un utilisateur puisse la manipuler. L'ouverture peut être par exemple une rainure permettant un mouvement au moins rectiligne de la poignée 340 de sorte à actionner le train de roulage 3 via la jambe de force 34. L'actionnement comprend notamment un basculement entre les positions rétractée 100 et déployée 200 du train de roulage 3. L'actionnement peut également comprendre un verrouillage dans chacune desdites positions 100, 200. Un vérin électrique ou un système de levage avec démultiplication mécanique peut assister l'actionnement. En particulier, le vérin électrique permet avantageusement de déployer et/ou de rétracter le train de roulage 3.

Optionnellement, le train de roulage 3 peut comprendre un système de freinage automatique en cas de rupture de l'attelage par exemple, ou une assistance au freinage éventuellement pilotée par un système de freinage par inertie.

L'élément de carène 5 est de préférence rigide. L'élément de carène 5 peut également comprendre des parties souples.

Selon une possibilité, l'élément de carène 5 comprend au moins une bavette 53 souple sur au moins un bord dudit élément. Cette bavette 53 est de préférence configurée pour relier l'au moins un bord de l'élément de carène 5 avec au moins une partie de la coque 2. La bavette 53 peut ainsi opérer une jonction entre deux parties adjacentes de l'élément de carène 5 et de la coque 2 respectivement. La bavette 53 peut être en caoutchouc par exemple, et/ou comprendre un matériau présentant une souplesse comparable à celle du caoutchouc notamment.

Une première partie de la coque 2 à l'avant du train de roulage 3 peut par exemple être reliée à une première extrémité de l'élément de carène 5 par une première bavette. Cette première bavette peut ainsi faire office d'articulation dans la position déployée 200.

Une deuxième extrémité de l'élément de carène 5 peut également être pourvue d'une deuxième bavette souple ou rigide par exemple. Cette deuxième extrémité, sur un côté opposé au côté de la première extrémité, se trouve à proximité du sol dans la position déployée 200. La deuxième bavette prolonge alors avantageusement le dispositif antiprojections.

Dans la position rétractée 100, la deuxième bavette rejoint une deuxième partie de la coque 2, de sorte qu'une continuité s'établit avantageusement entre l'élément de carène 5 et ladite deuxième partie de la coque 2.

On parle de continuité entre l'élément de carène 5 et ladite deuxième partie de la coque 2 en position rétractée 100 par opposition à une discontinuité dans le plan horizontal générée par la présence du train de roulage 3 dans la position déployée 200.

Cette continuité peut être stricte, les surfaces se suivant sans intervalle ni décalage significatifs dans l'espace. Cette continuité peut être une quasi continuité en ce sens que de légers intervalles ou décalages sont possibles sans que cela n'altère l'écoulement de l'eau le long de la coque ; par exemple des intervalles ou décalages inférieurs à 10 cm voire à 5 cm sont admis.

Optionnellement, une bavette souple faisant office de joint peut s'étendre sur tous les côtés de l'élément de carène 5 de manière à joindre tous les bords du logement prévu dans la coque 2 dans la position rétractée 100.

De préférence, l'élément de carène 5 présente au moins une continuité avec au moins une partie de la coque 2 dans la position rétractée 100. L'élément de carène 5 peut avantageusement présenter une continuité longitudinale avec la coque 2, de sorte à optimiser un écoulement d'eau dans la position rétractée 100, lors de la navigation notamment. La surface externe 52 de l'élément de carène 5 peut présenter au moins une forme spécifique à la navigation, telle qu'une nervure faisant office d'aileron ou de dérive par exemple.

Dans la position rétractée 100, le train de roulage 3 est situé au-dessus de l'élément de carène 5. Le train de roulage 3 est au moins en partie situé dans la coque 2, de préférence au-dessus d'une ligne de flottaison de l'embarcation 1, dans ladite position rétractée 100.

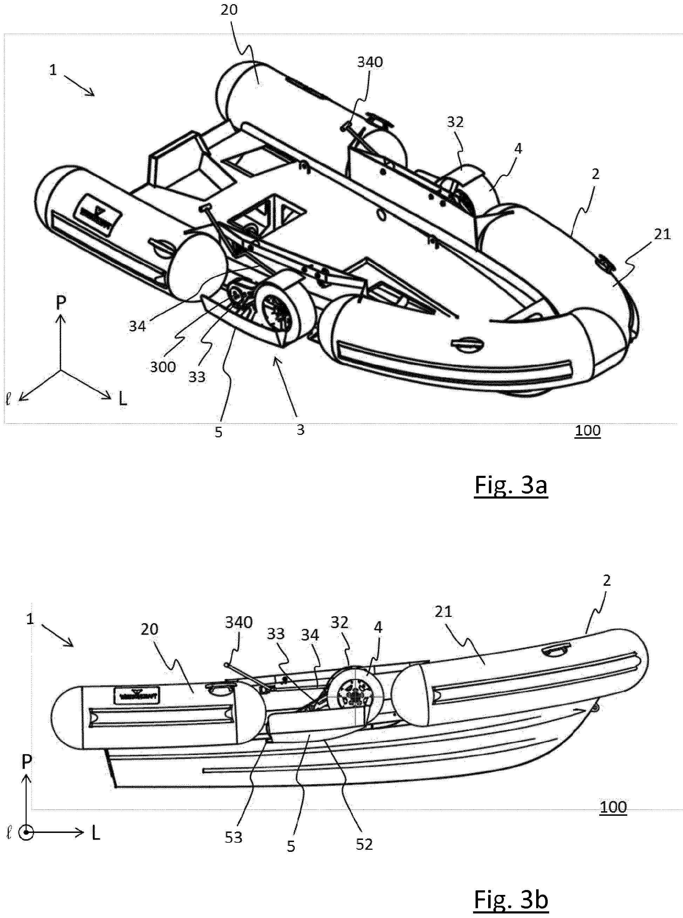

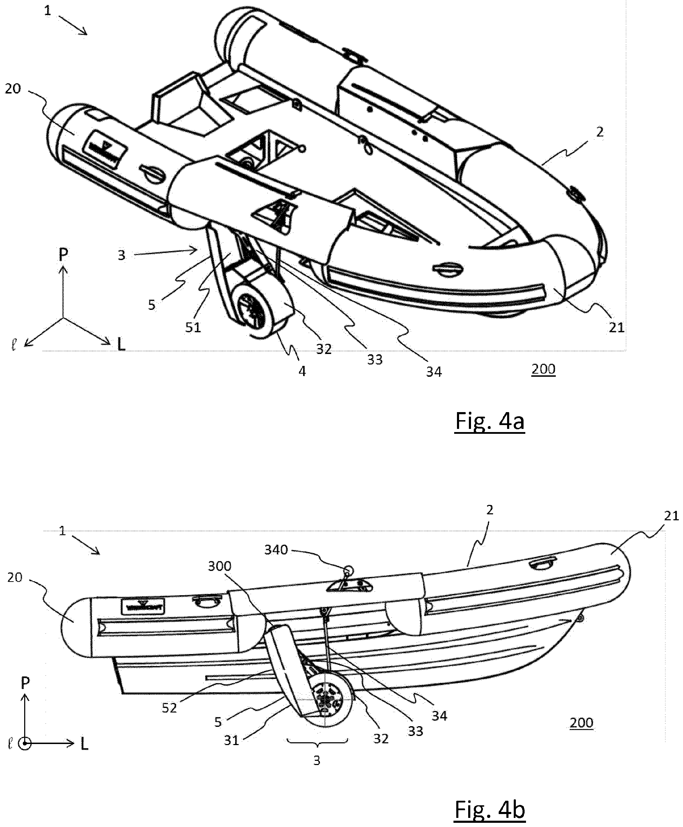

En référence aux figures 3a, 3b et 4a, 4b un deuxième mode de réalisation de l'invention est une embarcation 1 à coque 2 semi-rigide comprenant au moins deux boudins 20, 21 pneumatiques sur un pourtour de ladite coque 2.

Seules les caractéristiques distinctes du premier mode de réalisation sont décrites ci-après, les autres caractéristiques non décrites étant réputées identiques à celles du premier mode de réalisation. En particulier, l'élément de carène 5 associé au train de roulage 3 permettant d'une part de limiter les projections dans la position déployée 200 du train de roulage 3, et d'autre part de contribuer à la navigation dans la position rétractée 100 du train de roulage 3 est un principe commun aux deux modes de réalisation. Les différences portent notamment sur les caractéristiques de complémentarité de formes entre ledit élément de carène 5 et la coque 2 semi-rigide de l'embarcation 1.

Le train de roulage 3 est notamment configuré pour être déployé et rétracté dans une section dépourvue de boudins, entre lesdits deux boudins 20, 21 du pourtour de la coque 2. En particulier le train de roulage 3 est positionné longitudinalement entre lesdits boudins 20, 21 dans la position rétractée 100, dans la continuité de ceux-ci.

L'élément de carène 5 solidaire du train de roulage 3 est alors dirigé suivant l'axe longitudinal des boudins 20, 21. Dans la position rétractée 100, l'élément de carène 5 est configuré pour coopérer avec les boudins adjacents, notamment au niveau d'une partie inférieure desdits boudins 20, 21. L'élément de carène 5 peut par exemple présenter une forme au moins en partie semi-cylindrique alignée avec la partie inférieure des boudins 20, 21.

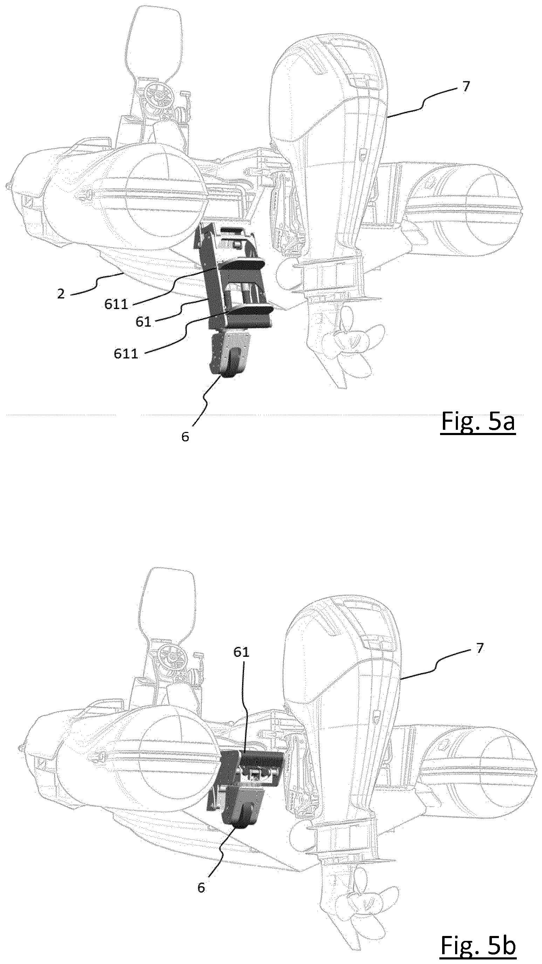

En référence aux figures 5a et 5b, l'embarcation 1 comprend, selon un autre mode de réalisation, une roue jockey 6 au niveau de la poupe de l'embarcation 1. Cette roue jockey 6 est configurée pour être rétractable.

Les trains roulants de l'embarcation 1 peuvent dès lors comprendre les trains de roulage 3 et la roue jockey 6.

La roue jockey 6 permet de fournir un troisième point d'appui au sol dans une position déployée des trains roulants, en complément des appuis fournis par les deux trains de roulage 3.

La roue jockey 6 est de préférence supportée par un bras 61.

Elle est de préférence libre en rotation vis-à-vis du bras 61, de sorte à pouvoir manoeuvrer l'embarcation 1 au sol selon différentes directions.

Le bras 61 supportant la roue jockey 6 est configuré pour être relevé, par exemple manuellement, de manière à passer d'une position déployée à une position relevée ou escamotée.

Le bras 61 est de préférence au moins en partie escamotable dans la coque 2 et/ou la carène.

La roue jockey 6 peut être montée de manière fixe ou articulée à l'extrémité du bras 61. Une telle articulation entre la roue jockey 6 et le bras 61 peut permettre d'optimiser l'encombrement de l'ensemble bras 61 et roue 6 dans la position relevée (figure 5b).

De manière avantageuse, le bras 61 supportant la roue jockey 6 peut être décalé de l'axe central longitudinal de l'embarcation 1, de sorte à pouvoir implanter selon cet axe central un autre élément, tel qu'un élément de remorquage et un timon en particulier.

La roue jockey 6 peut ainsi être déployée conjointement avec le timon de remorquage.

La roue jockey 6 peut également être déployée sans nécessité de relever le moteur 7.

Le bras 61 peut avantageusement comprendre au moins une marche 611 facilitant l'accès à bord de l'embarcation 1 pour un utilisateur.

Dans une réalisation de l'invention non présentée dans les figures, le bras 61 prend la forme d'une échelle escamotable comprenant au moins un barreau et la roue jockey.

L'invention n'est pas limitée aux modes de réalisation précédemment décrits mais s'étend à tous modes de réalisation entrant dans la portée des revendications.

### REFERENCES

1. Véhicule amphibie
2. Coque
   20, 21. Boudins
3. Train de roulage
   300. Axe de rotation
   31. Premier garde-boue
   32. Deuxième garde-boue
   33. Bras de suspension
   34. Jambe de force
      340. Poignée
4. Roue
5. Elément de carène
   51. Surface interne
   52. Surface externe
   53. Bavette
6. Roue jockey
   61. Bras
   611. Marche
7. Moteur
   100. position rétractée
   200. Position déployée
L. Dimension en longueur
I. Dimension en largeur
P. dimension en profondeur

## Revendications

1. Véhicule amphibie (1) comprenant au moins une coque (2) semi-rigide présentant une dimension en longueur, une dimension en largeur et une dimension en profondeur, et comprenant au moins un train de roulage (3) pourvu d'au moins une roue (4), ledit train de roulage (3) étant configuré pour être positionné alternativement au moins dans une position rétractée (100) et dans une position déployée (200) dans laquelle l'au moins une roue (4) est en liaison avec un sol,
le train de roulage (3) comprenant un élément de carène (5) solidaire dudit train de roulage (3), l'élément de carène (5) étant situé en-dessous de l'au moins une roue (4) suivant la dimension en profondeur de la coque (2), dans la position rétractée (100) du train de roulage (3), la coque (2) comprenant au moins deux boudins (20, 21) pneumatiques sur un pourtour de ladite coque (2), le train de roulage (3) étant, dans la position rétractée (100), positionné longitudinalement entre les au moins deux boudins (20, 21) pneumatiques dans la continuité de ceux-ci et dans une section dépourvue de boudins, de sorte à ce que l'élément de carène (5) assure une continuité hydrodynamique avec lesdits au moins deux boudins (20, 21) pneumatiques dans la position rétractée (100).

2. Véhicule amphibie (1) selon la revendication précédente, dans lequel l'élément de carène (5) est situé au moins en partie en face d'une première portion d'une bande de roulement de la roue (4), dans la position déployée (200) du train de roulage (3).

3. Véhicule amphibie (1) selon l'une quelconque des revendications précédentes dans lequel l'élément de carène (5) comprend une surface interne (51) configurée pour former au moins en partie un premier garde-boue (31) dans la position déployée (200) du train de roulage (3).

4. Véhicule amphibie (1) selon la revendication précédente dans lequel le train de roulage (3) comprend au moins un deuxième garde-boue (32) configuré pour entourer une deuxième portion d'une bande de roulement de la roue (4).

5. Véhicule amphibie (1) selon l'une quelconque des revendications précédentes dans lequel l'élément de carène (5) présente une largeur supérieure à celle de la roue (4).

6. Véhicule amphibie (1) selon l'une quelconque des revendications précédentes dans lequel l'élément de carène (5) comprend une surface externe (52) convexe.

7. Véhicule amphibie (1) selon l'une quelconque des revendications précédentes dans lequel l'élément de carène (5) comprend au moins une bavette (53) souple configurée pour relier au moins un bord dudit élément de carène (5) avec au moins une partie de la coque (2).

8. Véhicule amphibie (1) selon l'une quelconque des revendications précédentes dans lequel l'élément de carène (5) est configuré pour coopérer au moins longitudinalement avec une partie de la coque (2) afin de réaliser une continuité avec ladite au moins une partie de la coque (2) dans la position rétractée (100) du train de roulage (3).

9. Véhicule amphibie (1) selon l'une quelconque des revendications précédentes dans lequel le train de roulage (3) comprend au moins un bras de suspension (33), au moins un amortisseur et au moins une jambe de force (34) configurée pour pouvoir bloquer le train de roulage (3) dans la position déployée (200).

10. Véhicule amphibie (1) selon la revendication précédente dans lequel la jambe de force (34) présente une mobilité en rotation par rapport au train de roulage (3), selon un axe de rotation parallèle à celui de la roue (4).

11. Véhicule amphibie (1) selon la revendication précédente dans lequel la jambe de force (34) présente au moins un appui directement ou indirectement sur la coque (2), ledit appui pouvant être positionné dans un ensemble de positions distribuées selon un arc de cercle au niveau de la coque (2).

12. Véhicule amphibie (1) selon l'une quelconque des revendications précédentes dans lequel le train de roulage (3) coopère avec un vérin configuré pour déployer et rétracter ledit train de roulage (3).

13. Véhicule amphibie (1) selon l'une quelconque des revendications précédentes dans lequel le train de roulage (3) comprend un axe de rotation (300) configuré pour que le train de roulage (3) passe de la position rétractée (100) à la position déployée (200) et vice-versa.

14. Véhicule amphibie (1) selon la revendication précédente dans lequel l'élément de carène (5) est articulé relativement à la coque (2) selon un axe de rotation (300) du train de roulage (3).

## Patentansprüche

1. Amphibienfahrzeug (1), das mindestens einen halbstarren Rumpf (2) umfasst, der eine Längenabmessung, eine Breitenabmessung und eine Tiefenabmessung aufweist, und mindestens ein Fahrwerk (3) umfasst, das mit mindestens einem Rad (4) versehen ist, wobei das Fahrwerk (3) so ausgelegt ist, dass es wechselweise mindestens in einer eingefahrenen Stellung (100) und in einer ausgefahrenen Stellung (200) positioniert werden kann, in der das mindestens eine Rad (4) mit einem Boden in Verbindung steht,
wobei das Fahrwerk (3) ein fest mit dem Fahrwerk (3) verbundenes Verkleidungselement (5) umfasst, wobei sich das Verkleidungselement (5) in der eingefahrenen Stellung (100) des Fahrwerks (3) der Tiefenabmessung des Rumpfes (2) entlang unter dem mindestens einen Rad (4) befindet, wobei der Rumpf (2) an einem Umfang des Rumpfes (2) mindestens zwei pneumatische Wulstkörper (20, 21) umfasst, wobei das Fahrwerk (3) in der eingefahrenen Stellung (100) in Längsrichtung zwischen den mindestens zwei pneumatischen Wulstkörpern (20, 21), in Durchgängigkeit mit denselben und an einem Abschnitt ohne Wulstkörper positioniert ist, sodass das Verkleidungselement (5) in der eingefahrenen Stellung (100) eine hydrodynamische Durchgängigkeit mit den mindestens zwei pneumatischen Wulstkörpern (20, 21) sicherstellt.

2. Amphibienfahrzeug (1) nach dem vorstehenden Anspruch, wobei sich das Verkleidungselement (5) in der ausgefahrenen Stellung (200) des Fahrwerks (3) mindestens zum Teil gegenüber einem ersten Abschnitt einer Lauffläche des Rades (4) befindet.

3. Amphibienfahrzeug (1) nach einem der vorstehenden Ansprüche, wobei das Verkleidungselement (5) eine Innenfläche (51) umfasst, die so ausgelegt ist, dass sie in der ausgefahrenen Stellung (200) des Fahrwerks (3) mindestens zum Teil eine erste Radabdeckung (31) bildet.

4. Amphibienfahrzeug (1) nach dem vorstehenden Anspruch, wobei das Fahrwerk (3) mindestens eine zweite Radabdeckung (32) umfasst, die so ausgelegt ist, dass sie einen zweiten Abschnitt einer Lauffläche des Rades (4) umgibt.

5. Amphibienfahrzeug (1) nach einem der vorstehenden Ansprüche, wobei das Verkleidungselement (5) eine Breite aufweist, die größer ist als die des Rades (4).

6. Amphibienfahrzeug (1) nach einem der vorstehenden Ansprüche, wobei das Verkleidungselement (5) eine konvexe Außenfläche (52) umfasst.

7. Amphibienfahrzeug (1) nach einem der vorstehenden Ansprüche, wobei das Verkleidungselement (5) mindestens einen biegsamen Schmutzfänger (53) umfasst, der so ausgelegt ist, dass er mindestens eine Kante des Verkleidungselements (5) mit mindestens einem Teil des Rumpfes (2) verbindet.

8. Amphibienfahrzeug (1) nach einem der vorstehenden Ansprüche, wobei das Verkleidungselement (5) so ausgelegt ist, dass es in der eingefahrenen Stellung (100) des Fahrwerks (3) mindestens in Längsrichtung mit einem Teil des Rumpfes (2) zusammenwirkt, um eine Durchgängigkeit mit dem mindestens einen Teil des Rumpfes (2) herzustellen.

9. Amphibienfahrzeug (1) nach einem der vorstehenden Ansprüche, wobei das Fahrwerk (3) mindestens einen Querlenker (33), mindestens einen Stoßdämpfer und mindestens ein Federbein (34) umfasst, das so ausgelegt ist, dass es das Fahrwerk (3) in der ausgefahrenen Stellung (200) arretieren kann.

10. Amphibienfahrzeug (1) nach dem vorstehenden Anspruch, wobei das Federbein (34) in Bezug auf das Fahrwerk (3) eine Drehbeweglichkeit entlang einer Drehachse aufweist, die zu der des Rades (4) parallel ist.

11. Amphibienfahrzeug (1) nach dem vorstehenden Anspruch, wobei das Federbein (34) mindestens eine direkte oder indirekte Auflage am Rumpf (2) aufweist, wobei die Auflage in einer Reihe von Stellungen positioniert werden kann, die entlang eines Kreisbogens im Bereich des Rumpfes (2) verteilt sind.

12. Amphibienfahrzeug (1) nach einem der vorstehenden Ansprüche, wobei das Fahrwerk (3) mit einem Zylinder zusammenwirkt, der so ausgelegt ist, dass er das Fahrwerk (3) aus- und einfährt.

13. Amphibienfahrzeug (1) nach einem der vorstehenden Ansprüche, wobei das Fahrwerk (3) eine Drehachse (300) umfasst, die so ausgelegt ist, dass das Fahrwerk (3) aus der eingefahrenen Stellung (100) in die ausgefahrene Stellung (200) gebracht wird, und umgekehrt.

14. Amphibienfahrzeug (1) nach dem vorstehenden Anspruch, wobei das Verkleidungselement (5) relativ zum Rumpf (2) entlang einer Drehachse (300) des Fahrwerks (3) angelenkt ist.

## Claims

1. Amphibious vehicle (1) comprising at least one semi-rigid hull (2) having a length dimension, a width dimension and a depth dimension, and comprising at least one running gear (3) provided with at least one wheel (4), said running gear (3) being configured so as to be positioned alternately in at least one retracted position (100) and in a deployed position (200) wherein the at least one wheel (4) is in connection with the ground,
the running gear (3) comprising a fairing element (5) secured to said running gear (3), the fairing element (5) being situated below the at least one wheel (4) according to the depth dimension of the hull (2), in the retracted position (100) of the running gear (3), the hull (2) comprising at least two pneumatic fenders (20, 21) on a periphery of said hull (2), the running gear (3) being, in the retracted position (100), positioned longitudinally between the at least two pneumatic fenders (20, 21) in line with them and in a section with no fenders, so that the fairing element (5) provides hydrodynamic continuity with said at least two pneumatic fenders (20, 21) in the retracted position (100).

2. Amphibious vehicle (1) according to the preceding claim, wherein the fairing element (5) is situated at least partly facing a first portion of a tread of the wheel (4), in the deployed position (200) of the running gear (3).

3. Amphibious vehicle (1) according to either one of the preceding claims, wherein the fairing element (5) comprises an inner surface (51) configured to form at least partly a first mudguard (31) in the deployed position (200) of the running gear (3).

4. Amphibious vehicle (1) according to the preceding claim, wherein the running gear (3) comprises at least one second mudguard (32) configured to surround a second portion of a tread of the wheel (4).

5. Amphibious vehicle (1) according to any one of the preceding claims, wherein the varying element (5) has a width greater than that of the wheel (4).

6. Amphibious vehicle (1) according to any one of the preceding claims, wherein the fairing element (5) comprises a convex outer surface (52).

7. Amphibious vehicle (1) according to any one of the preceding claims, wherein the fairing element (5) comprises at least one flexible flap (53) configured to connect at least one edge of said fairing element (5) with at least part of the hull (2).

8. Amphibious vehicle (1) according to any one of the preceding claims, wherein the fairing element (5) is configured to cooperate at least longitudinally with a part of the hull (2) in order to produce continuity with said at least part of the hull (2) in the retracted position (100) of the running gear (3).

9. Amphibious vehicle (1) according to any one of the preceding claims, wherein the running gear (3) comprises at least one suspension arm (33), at least one damper and at least one strut (34) configured to be able to lock the running gear (3) in the deployed position (200).

10. Amphibious vehicle (1) according to the preceding claim, wherein the strut (34) has rotational mobility with respect to the running gear (3), on a rotation axis parallel to that of the wheel (4).

11. Amphibious vehicle (1) according to the preceding claim, wherein the strut (34) has at least one abutment directly or indirectly on the hull (2), said abutment being able to be positioned in a set of positions distributed in an arc of a circle on the hull (2).

12. Amphibious vehicle (1) according to any one of the preceding claims, wherein the running gear (3) cooperates with a thruster configured to deploy and retract said running gear (3).

13. Amphibious vehicle (1) according to any one of the preceding claims, wherein the running gear (3) comprises a rotation axis (300) configured so that the running gear (3) passes from the retracted position (100) to the deployed position (200) and vice versa.

14. Amphibious vehicle (1) according to the preceding claim, wherein the fairing element (5) is articulated in relation to the hull (2) on a rotation axis (300) of the running gear (3).
